Europäisches Patentamt

European Patent Office

Office européen des brevets

(11) Veröffentlichungsnummer: **0 161 344**
**A1**

(12) EUROPÄISCHE PATENTANMELDUNG

(21) Anmeldenummer: 84115583.1

(22) Anmeldetag: 17.12.84

(51) Int. Cl.⁴: **G 06 F 12/06**

(30) Priorität: 28.12.83 DE 3347357

(43) Veröffentlichungstag der Anmeldung: 21.11.85
Patentblatt 85/47

(84) Benannte Vertragsstaaten: CH DE FR LI NL SE

(71) Anmelder: **Siemens Aktiengesellschaft, Berlin und München Wittelsbacherplatz 2, D-8000 München 2 (DE)**

(72) Erfinder: **Günkel, Hans-Dieter, Dipl.-Ing., Budapester Strasse 20, D-8520 Erlangen (DE)**
Erfinder: **Röhrle, Josef, Dipl.-Ing.(FH), Am Kahlberg 12, D-8521 Hessdorf (DE)**

(54) Einrichtung zum Vergeben von Adressen an steckbare Baugruppen.

(57) Um steckbare Baugruppen (BG1) seitens einer Steuereinheit (SE) Adressen für einen adressengesteuerten Datenaustausch zuzuführen, ist jeder Baugruppe (BG) zum einen eine den Typ der Baugruppe (BG1) kennzeichnende Baugruppenkennung eingeprägt. Ferner wird jeder Baugruppe (BG1) eine Steckplatzkennung über einen Geber (G) mitgeteilt. Während einer Initialisierungsphase werden alle Baugruppen (BG1) über die Steckplatzkennungen aufgerufen und teilen der Steuereinheit (SE) ihre jeweiligen Baugruppenkennungen mit. Von der Steuereinheit (SE) werden draufhin über Adressierung der Steckplatzkennungen den Baugruppen (BG1) deren relevante Adressen mitgeteilt, die für den weiteren Datenaustausch verwendet werden.

0161344

Siemens Aktiengesellschaft     Unser Zeichen
Berlin und München     VPA **83 P 3 4 5 0 E**

Einrichtung zum Vergeben von Adressen an steckbare
Baugruppen

Die Erfindung bezieht sich auf eine Einrichtung zum Vergeben von Adressen an steckbare Baugruppen, die für
einen adressengesteuerten Datenaustausch mit einer Steuereinheit vorgesehen sind.

Wenn eine zentrale Steuereinheit, z.B. einer Werkzeugmaschinensteuerung, mit einer Vielzahl von zugeordneten Baugruppen kommuniziert, erfolgt diese Kommunikation im allgemeinen adressengesteuert. Dazu ist es erforderlich, zunächst den einzelnen Baugruppen Adressen zuzuordnen.Dieses
Zuordnen geschieht bei handelsüblichen Einrichtungen durch
manuelle Eingriffe, indem bei den einzelnen Baugruppen
elektrische Brücken eingesetzt werden oder programmierte
Festwertspeicher eingefügt werden.

Aufgabe der Erfindung ist es, bei einer Einrichtung der
eingangs genannten Art eine Möglichkeit zu schaffen, daß
ohne manuelle Eingriffe allein mit Hilfe der Steuereinheit den Baugruppen Adressen für den Datenaustausch zugewiesen werden können. Dabei wird davon ausgegangen, daß
die Baugruppen steckbar in einem vorgegebenen räumlichen
Ordnungssystem angeordnet sind.

Gemäß der Erfindung wird diese Aufgabe dadurch gelöst,
daß jeder Baugruppe eine Steckplatzkennung zuführbar ist,
daß jeweils einem ersten Speicher jeder Baugruppe eine
den Typ der Baugruppe angebende Baugruppenkennung einprägbar ist, daß während einer Initialisierungsphase vor Aufnahme des eigentlichen Datenaustausches von der Steuer-

Woe 2 Bih / 23.12.1983

einheit durch aufeinanderfolgendes Adressieren aller möglichen Steckplatzkennungen die jeweils vorliegenden Baugruppenkennungen abfragbar sind, indem ein Adressenvergleicher jeder Baugruppe die Konkordanz der jeweils aufgerufenen Adresse mit der jeweiligen Steckplatzkennung detektiert und demzufolge das Ausgeben der jeweiligen Baugruppenkennung veranlaßt, und daß daraufhin von der Steuereinheit,ebenfalls durch Adressieren der Steckplatzkennungen jeder Baugruppe, in einem dieser jeweils zugeordneten zweiten Speicher eine für den weiteren Datenaustausch jeweils relevante Adresse zuführbar ist.

Eine erste vorteilhafte Ausbildung der Erfindung ist dadurch gekennzeichnet, daß das Vorliegen der Initialisierungsphase allen Baugruppen durch ein Kennsignal einer Steuerleitung mitteilbar ist. Eine derartige Steuerleitung kann insbesondere dann, wenn als Baugruppen Flachbaugruppe in einem Flachbaugruppenträger vorgesehen sind, leicht angelegt werden. Auf eine spezielle Befehlsübertragung zur Signalisierung der Initialisierungsphase kann dann verzichtet werden.

Während der Initialisierungsphase können alle nicht für die Adressenvergabe vorgesehenen Funktionselemente der Baugruppen abschaltbar sein, damit jede Störung der Adressierung mit Sicherheit vermieden wird.

Eine weitere vorteilhafte Ausgestaltung der Erfindung ist dadurch gekennzeichnet, daß die jeweilige Steckplatzkennung jeweils durch elektrische Kennsignale an vorgegebenen Kontakten der Kontakte eines jeweils zugeordneten, an einem Baugruppenträger angeordneten Steckverbinders für die Baugruppe dieser mitteilbar ist. Hierdurch ist eine technisch äußerst einfache Art der Übertragung der Steckplatzkennung möglich.

Es erweist sich als besonders wirtschaftlich, als ersten Speicher einen nichtflüchtigen Lesespeicher zu verwenden.

Eine eindeutige Unterscheidung der Initialisierungsphase vom übrigen Betrieb ermöglicht es, daß die Steckplatzkennungen außerhalb der Initialisierungsphase als relevante Adressen verfügbar sind, so daß der betrieblich ausnutzbare Adreßraum durch ein für die Streckplatzkennungen jeweils erforderliches Adreßfeld ungeschmälert bleibt.

Dadurch, daß ausgehend von einem Grundzustand der Steuereinheit jeweils eine Initialisierungsphase auslösbar ist, ist gewährleistet, daß manuelle Eingriffe in das System, beispielsweise der Austausch von Baugruppen, nicht unerkannt bleiben und ggf. eine neue Adressierung auslösen.

Für den Ablauf des eigentlichen Betriebs erweist es sich als günstig, wenn jeder Baugruppe bereits während der Initialisierungsphase neben der jeweils relevanten Adresse auch Zusatzangaben, wie Angaben über die Anzahl von einzuhaltenden Wartezyklen den Ausbaugrad oder den Änderungsstand, einprägbar sind.

Jeder einzelnen Baugruppe kann im übrigen nicht nur eine punktuell wirksame Adresse, sondern ein beliebiger Adreßbereich vorgegeben werden, wenn die Funktion der Baugruppe dies erfordern sollte. Das erweist sich besonders dann als günstig, wenn eine Vielzahl unterschiedlicher Baugruppen zum Einsatz kommen kann.

Ein Ausführungsbeispiel der Erfindung ist in der Zeichnung dargestellt und wird im folgenden näher erläutert.

Dabei zeigen:
Figur 1 ein Blockschaltbild und
Figur 2 eine räumliche Anordnung.

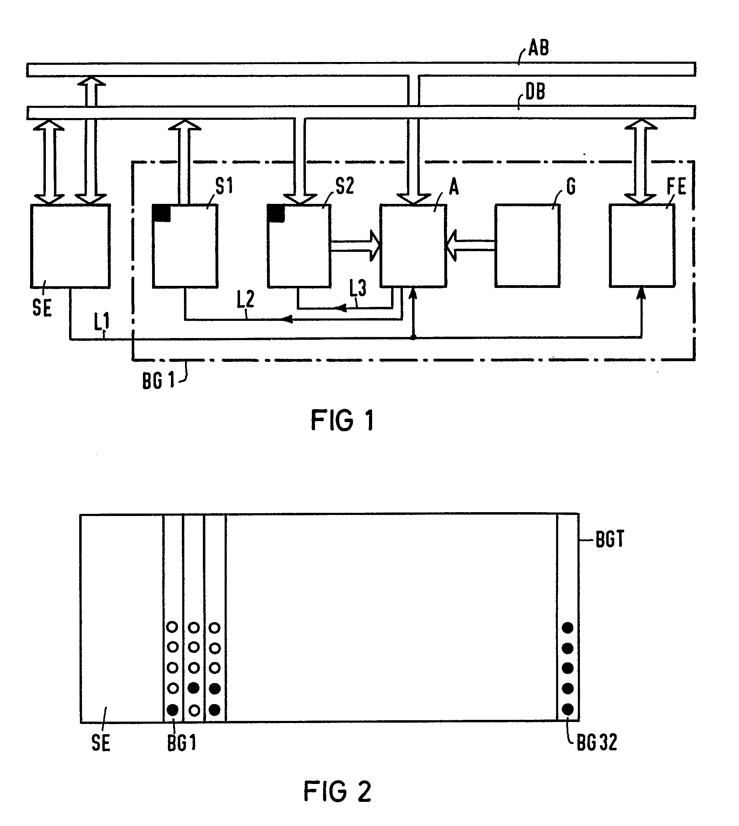

In der Darstellung gemäß Fig.1 ist eine Steuereinheit SE gezeigt, die über einen Adreßbus AB und einen Datenbus DB in Verbindung mit einer Baugruppe BG1 (gestrichelt angedeutet) in Verbindung steht. Eine mögliche weitere Verbindung über einen Steuerbus ist der Übersichtlichkeit halber nicht dargestellt. Neben der Baugruppe BG1 können, wie weiter unten noch in Fig.2 gezeigt ist, eine Vielzahl weiterer Baugruppen vorgesehen sein.

Jede Baugruppe, u.a. die Baugruppe BG1, beinhaltet dabei einen ersten Speicher S1, dem eine Angabe über den Typ der jeweiligen Baugruppe als Baugruppenkennung eingeprägt ist. Dieser erste Speicher S1 ist jeweils als nichtflüchtiger Festwertspeicher ausgebildet. Ferner ist für jede Baugruppe jeweils ein zweiter Speicher S2 als Schreibspeicher vorgesehen. Der Baugruppe BG1 und den übrigen Baugruppen ist jeweils ein mit dem Adreßbus AB verbunder Adressenvergleicher A zugeordnet, dem neben der auf dem Adreßbus vorliegenden jeweiligen Adresse entweder eine von einem Geber G jeweils ermittelte Steckplatzkennung oder die jeweils im Speicher S2 gespeicherte Information zum Zwecke eines Vergleichs zugeführt werden können. Auf die Ausbildung des Gebers und die Aufgabe der Steckplatzkennung sowie der Information im zweiten Speicher S2 wird im folgenden noch eingegangen. Der Baugruppe BG1 und den übrigen Baugruppen sind ferner weitere Funktionselemente FE beliebiger Art zugeordnet.

Wenn von der Steuereinheit SE der Baugruppe BG für die Aufnahme eines regulären Datenaustausches eine Adresse zugewiesen werden soll, geschieht dies während einer jeweils auf einen Grundzustand folgenden Initialisierungsphase. Dazu wird zum einen von der Steuereinheit SE auf einer Steuerleitung L1 ein die Initialisierungsphase markierendes Kennsignal ausgegeben, das an den Adressenvergleicher A gelangt. Dieser wird dadurch veranlaßt, die auf dem Adreßbus AB während des Vorliegens der Initialisierungsphase von der Steuereinheit SE ausgegebenen
Adressen (entweder als Einzeladressen oder Adreßräumen)
mit der ihm vom Geber G übermittelten Steckplatzkennung
zu vergleichen. Bei Konkordanz der beiden Angaben wird
bewirkt, daß die den Typ der Baugruppe angebende Baugruppenkennung über den Datenbus DB der Steuereinheit SE
mitgeteilt wird. Dazu wird vom Adressenvergleicher A dem
ersten Speicher S1 über eine Steuerleitung L2 ein entsprechendes Kennsignal zugeführt. Die Verwendung von
Adreßräumen erlaubt dabei die Verwendung von Adressierbausteinen mit relativ wenigen Anschlüssen.

Die Steuereinheit SE ermittelt von allen möglichen Baugruppen, u.a. der Baugruppe BG1, durch Abfrage aller möglichen Steckplatzkennungen die jeweiligen Baugruppenkennungen, so daß der Steuereinheit SE daraufhin der Ausbaugrad des gesamten Systems bekannt ist. Damit ist der
Steuereinheit SE die Möglichkeit gegeben, Adressen bzw.
Adreßbereiche je nach Erfordernis sämtlichen Baugruppen,
u.a. der Baugruppe BG1, mitzuteilen. Dies geschieht wiederum durch Aufruf aller Steckplatzkennungen bzw. - bei
Kenntnis des Ausbaugrades - aller Steckplatzkennungen belegter Steckplätze über den Adreßbus AB, wobei dann über
den Datenbus DB die jeweils ausgewählte Adresse dem jeweiligen zweiten Speicher S2 jeder Baugruppe, u.a. der
Baugruppe BG1 eingeprägt wird. Dazu wird dem jeweiligen
zweiten Speicher S2 über eine Steuerleitung L3 vom jeweiligen Adressenvergleicher A ein entsprechendes Kennsignal zugeführt. Nachdem dies geschehen ist, wird das
Kennsignal auf der Steuerleitung L1 zurückgenommen und
die Baugruppen, u.a. die Baugruppe BG1, werden über eine
Adresse auf dem Adreßbus AB, die der jeweils zugeordneten,
im Speicher S2 gespeicherten Adresse, entspricht, aufgerufen.

Wenn nach Aufruf einer Steckplatzkennung nicht innerhalb einer vorgegebenen Zeitspanne eine Baugruppenkennung abgegeben wird, erkennt die Steuereinheit SE
hieraus, daß diesem Steckplatz keine Baugruppe zugeordnet ist. Es ist aber auch möglich, daß dem Datenbus
DB stets ein Kontroll-Datenwort eingeprägt ist, das
durch die Baugruppenkennungen jeweils überschrieben
wird. Sofern nach Aufruf einer Steckplatzkennung das
Kontroll-Datenwort bestehen bleibt, deutet dies darauf
hin, daß der zugehörige Steckplatz unbesetzt ist.

Während der Initialisierungsphase wird aufgrund des Vorliegens des Kennsignals auf der Steuerleitung L1 ferner
jede nicht für die Adreßvergabe vorgesehene Funktionseinheit, beispielsweise die Funktionseinheit FE der Baugruppe BG1, unwirksamgeschaltet.

In der Darstellung gemäß Fig.2 ist die räumliche Anordnung der Baugruppen, im gewählten Beispiel der Baugruppen
BG1-BG32 in einem Baugruppenträger BGT schematisiert angegeben. Neben den Baugruppen BG1-BG32 ist im Baugruppenträger BGT ferner die Steuereinheit SE untergebracht. In
der Darstellung gemäß Fig.2 ist angedeutet, wie die Übermittlung der Steckplatzkennung an die einzelnen Baugruppen BG1-BG32 erfolgt. Dazu sind jeweils vorgegebenen
Kontakten der Kontakte von Steckverbindern (der Übersichtlichkeit halber nicht dargestellt) des Baugruppenträgers
BGT elektrische Kennsignale eingeprägt. Die vorgegebenen
Kontakte, die somit die Funktion des Gebers G gemäß
Fig.1 beinhalten, sind dabei durch Kreise angedeutet.
Die übrigen, für andere Leitungszwecke vorgesehenen
Kontakte sind der Anschaulichkeit halber nicht dargestellt. Die jeweiligen elektrischen Kennsignale sind
dadurch symbolisiert, daß beim Zustand logisch "1" jeder entsprechende Kreis ausgefüllt dargestellt ist,
während der jeweilige Kreis beim Zustand logisch "0" offengehalten ist. Damit kann den Baugruppen BG1-BG32 beispielsweise die Folge der Binärzahlen 00001 bis 11111 eingeprägt werden.

Die Zuordnung der Steckplatzkennungen zu den steckbaren Baugruppen kann auch nach einen beliebigen anderen Schema erfolgen. Wesentlich ist jedoch, daß für jeden Steckplatz eine spezifische Steckplatzkennung zur Verfügung steht.

9 Patentansprüche
2 Figuren

Patentansprüche

1. Einrichtung zum Vergeben von Adressen an steckbare Baugruppen, die für einen adressengesteuerten Datenaustausch mit einer Steuereinheit vorgesehen sind, d a d u r c h   g e k e n n z e i c h n e t ,   daß jeder Baugruppe (BG1 bis BG32) eine Steckplatzkennung zuführbar ist, daß jeweils einem ersten Speicher (R1) jeder Baugruppe (BG1-BG32) eine den Typ der Baugruppe (BG1-BG32) angebende Baugruppenkennung einprägbar ist, daß während einer Initialisierungsphase vor Aufnahme des eigentlichen Datenaustausches von der Steuereinheit (SE) durch aufeinanderfolgendes Adressieren aller möglichen Steckplatzkennungen die jeweils vorliegenden Baugruppenkennungen abfragbar sind, indem ein Adressenvergleicher (A) jeder Baugruppe (BG1-BG32) die Konkordanz der jeweils aufgerufenen Adresse mit der jeweiligen Steckplatzkennung detektiert und demzufolge das Ausgeben der jeweiligen Baugruppenkennung veranlaßt, und daß daraufhin von der Steuereinheit (SE) ebenfalls durch Adressieren der Steckplatzkennungen jeder Baugruppe (BG1-BG32), in einem dieser jeweils zugeordneten zweiten Speicher (R2) eine für den weiteren Datenaustausch jeweils relevante Adresse zuführbar ist.

2. Einrichtung nach Anspruch 1,   d a d u r c h   g e - k e n n z e i c h n e t ,   daß das Vorliegen der Initialisierungsphase allen Baugruppen (BG1-BG32) durch ein Kennsignal einer Steuerleitung (L1) mitteilbar ist.

3. Einrichtung nach Anspruch 1 oder 2,   d a d u r c h   g e k e n n z e i c h n e t ,   daß während der Initialisierungsphase alle nicht für die Adressenvergabe vorgesehenen Funktionselemente (FE) der Baugruppen (BG1-BG32) abschaltbar sind.

4. Einrichtung nach einem der vorstehenden Ansprüche, d a d u r c h   g e k e n n z e i c h n e t , daß die jeweilige Steckplatzkennung jeweils durch elektrische Kennsignale an vorgegebenen Kontakten der Kontakte eines jeweils zugeordneten, an einem Baugruppenträger (BGT) angeordneten Steckverbinders für die Baugruppe (BG1-BG2) dieser mitteilbar ist.

5. Einrichtung nach einem der vorstehenden Ansprüche, d a d u r c h   g e k e n n z e i c h n e t , daß als erster Speicher (R1) ein nichtflüchtiger Lesespeicher vorgesehen ist.

6. Einrichtung nach einem der vorstehenden Ansprüche, d a d u r c h   g e k e n n z e i c h n e t , daß die Steckplatzkennungen außerhalb der Initialisierungsphase als relevante Adressen verfügbar sind.

7. Einrichtung nach einem der vorstehenden Ansprüche, d a d u r c h   g e k e n n z e i c h n e t , daß ausgehend von einem Grundzustand der Steuereinheit jeweils eine Initialisierungsphase auslösbar ist.

8. Einrichtung nach einem der vorstehenden Ansprüche, d a d u r c h   g e k e n n z e i c h n e t , daß jeder Baugruppe neben der jeweils relevanten Adresse auch Zusatzangaben, einprägbar sind.

9. Einrichtung nach einem der vorstehenden Ansprüche, d a d u r c h   g e k e n n z e i c h n e t , daß als relevante Adresse jeweils ein Adreßbereich vorgebbar ist.

0161344

83 P 3450

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | IBM TECHNICAL DISCLOSURE BULLETIN, Band 16, Nr. 1, Juni 1973, Seiten 67,68, New York, US; L.J. ROSENBERG: "Program controlled I/O address assignment * Seiten 67,68 * | 1 | G 06 F 12/06 |
| A | IDEM | 2,6 | |
| Y | EP-A-0 044 949 (IBM) * Figuren 4,5; Seite 9, letzter Absatz - Seite 13, Zeile 2 * | 1 | |
| Y | EP-A-0 086 137 (MERLIN GERIN) * Figuren 1-3,5; Seite 3, Zeile 4 - Seite 4, Zeile 27; Seite 6, Zeile 24 - Seite 7, Zeile 10 * | 1 | |
| A | | 4 | RECHERCHIERTE SACHGEBIETE (Int. Cl.4) <br> G 06 F 12/06 |
| A | IBM TECHNICAL DISCLOSURE BULLETIN, Band 23, Nr. 8, Januar 1981, Seiten 3564-3565, New York, US; J.A. HILL et al.: "Dynamic device address assignment mechanism" | 1 | |

Der vorliegende Recherchenbericht wurde für alle Patentansprüche erstellt.

| Recherchenort <br> DEN HAAG | Abschlußdatum der Recherche <br> 01-04-1985 | Prüfer <br> LEDRUT P. |
|---|---|---|

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | IBM TECHNICAL DISCLOSURE BULLETIN, Band 18, Nr. 3, August 1975, Seiten 878-879, New York, US; E.J. ANNUNZIATA et al.: "Basic storage module selection check" | 1 | |
| | --- | | |
| A | IBM TECHNICAL DISCLOSURE BULLETIN, Band 18, Nr. 11, April 1976, Seite 3717, New York, US; F.J. AICHELMANN: "Dynamic array return address validation" | 1 | |
| | --- | | |
| A | IBM TECHNICAL DISCLOSURE BULLETIN, Band 25, Nr. 12, Mai 1983, Seiten 6343-6345, New York, US; P.A. JANSON et al.: "Dynamic address allocation in a local area network" | 1 | RECHERCHIERTE SACHGEBIETE (Int. Cl.4) |
| | --- | | |
| A | US-A-4 084 230 (MATICK) | 1 | |
| | ----- | | |

Der vorliegende Recherchenbericht wurde für alle Patentansprüche erstellt.

| Recherchenort DEN HAAG | Abschlußdatum der Recherche 01-04-1985 | Prüfer LEDRUT P. |
|---|---|---|